# EUROPEAN PATENT APPLICATION

(11) **EP 2 819 321 A1**
(43) Date of publication of application: **31.12.2014**
(21) Application number: 13305894.1
(22) Date of filing: 27.06.2013
(51) Int. Cl.: H04B 10/071

(54) **Packet optical add drop multiplexing node for an optical ring network**

(71) Applicant: ALCATEL LUCENT, 92100 Boulogne-Billancourt (FR)
(72) Inventor: Pointurier, Yvan, 91620 NOZAY (FR); Simonneau, Christian, 91620 NOZAY (FR); Vacondio, Francesco, 91620 NOZAY (FR)
(74) Representative: Wetzel, Emmanuelle

(57) **Abstract**

Proposed is a packet optical add drop multiplexing node, which comprises a first optical interface that is operable to receive a set of optical WDM signals, an optical WDM amplifier, which is optically coupled at its input to the first optical interface, and an optical circulator, which comprises three ports. The circulator is coupled at its first port to an output of the optical WDM amplifier. The circulator provides signals received at its first port to its second port, and furthermore provides signals received at its second port to its third port. The circulator is connected at its second port to a demultiplexer-and-multiplexer, which distributes the WDM signals onto optical gates. The circulator is connected at its third port to a second optical interface of the node, at which optical signals may be transmitted. The node comprises furthermore a further optical gate, which optically bypasses the optical WDM amplifier.

## Description

### Field of the invention

The invention relates to a packet optical add drop multiplexing node.

### Background

For data transmission in an optical network the concept of using optical packet signals between packet optical add drop multiplexing nodes is frequently applied within optical ring networks. Within such ring network, a number of optical nodes are connected via optical links in a ring structure.

The optical ring network may contain one optical ring in which a set of Wavelength Division Multiplex (WDM) signals is transmitted in one transmission direction along this one optical ring. Furthermore, the optical ring network may contain furthermore a second optical ring, along which optical packet signals in the form of optical WDM signals are transmitted in an opposite transmission direction.

When relying on the concept of WDM signals for transmitting a set of optical packet signals along a same optical link, the different optical packet signals have different respective wavelengths.

Optical packet signals rely furthermore on the concept of Time Division Multiplexing (TDM). In the technology of TDM, one optical packet signal contains successive time slots of equal length. Within each time slot, there may be transmitted a respective optical data packet. The time slots carrying the respective optical data packets may also be called data packet time slots. The data packet time slots may be separated by so-called guard-band time slots. In other words, an optical packet signal carries the respective optical data packet sequence via a respective packet time slot sequence.

For applying the concept of optical packet signals as TDM signals in combination with the technique of WDM, the different data packet sequences carried by different optical packet signals have respective different wavelengths and are synchronous to each other. In other words, the respective packet time slot sequences are synchronous to each other in such a way, that their packet time slots are of equal length and in that the beginnings and the endings of the time slots of different optical packet signals are also synchronous to each other.

Within an optical ring network, there may be one or more optical nodes present, which may be called packet optical add drop multiplexing (POADM) nodes.

A POADM node is able to add optical data packets to one or more of the optical packet signals and also to drop one or more optical data packets from one or more respective optical packet signals. Adding an optical data packet carrying transmission data may be desirable, in the case that the respective POADM node is connected also to other types of transmission networks or other types of network devices, from which the respective POADM node receives transmission data that shall be propagated along one of the optical rings of the optical ring network. Dropping an optical data packet at a respective POADM node may be desirable, in the case that the respective POADM node receives transmission data within a respective optical data packet, wherein the data received shall be propagated towards other types of transmission networks or network devices, to which the respective POADM node may be connected.

The type of optical ring network described above may be used to carry transmission data that evolved from wireless traffic data. In other words, the above described optical ring networks may be used as optical backhauling networks for wireless networks.

For wireless backhauling networks, there is a strict synchronization requirement, in the sense that the different nodes of the backhauling network have to operate using synchronous clocks. In particular, the protocol IEEE1588 V2 enables the distribution of a 'time of day' clock information from one node, preferably called master node, to further nodes of the network, preferably called slave nodes. For synchronizing the different nodes of a wireless backhauling network, knowledge of the physical length of the different optical links connecting the different network nodes has to be provided with the requirement of a certain accuracy.

In the case, that two adjacent nodes of the optical network acting as the wireless backhauling network are connected by two optical links, wherein each link provides data transmission along a respective transmission direction and wherein the two transmission directions are opposite to each other, the measurement of the link length of these two optical links may be carried out using the IEEE1588 V2 protocol.

However, in the case that these two links are not of the same length, such that there is a so-called link-asymmetry, then the link length measurement based on the IEEE1588 V2 measurement as well as the distribution of the clock information will be biased, wherein the bias is proportional to the asymmetry of the link length between the links.

The link asymmetry, which is the length difference between the two optical links connecting two adjacent nodes, may not exceed a certain length difference, for example a length difference of 600 m. Such a maximum length difference may also not be exceeded between one node measuring the overall length difference towards another node using the IEEE1588 V2 protocol, wherein the other node may be not the next adjacent node but a further node within the network.

In other words, in the case, that the maximum link asymmetry is exceeded between two nodes, link length measurement as well as clock distribution will not work between these two nodes when trying to use the IEEE1588 V2 protocol.

These days, an implementation of the IEEE1588 V2 protocol is a requirement for wireless backhauling networks.

Individual link measurement of two optical links may be carried out within an optical network using manual intervention, by applying measurement equipment at each end of a first optical link for measuring the length of the optical link and then also applying measurement equipment at each end of the other optical link for measuring the length of the other optical link. Using the manually achieved measurement results, the link asymmetry may then be derived.

Such link length measurements may be then provided to the IEEE1588 V2 protocol, which then may use the measurement results for compensating the given link asymmetry.

### Summary

Proposed is a packet optical add drop multiplexing node for an optical ring network.

The node comprises a first optical interface, which is operable to receive a set of optical WDM signals.

Furthermore, the node comprises an optical WDM amplifier, which is optically coupled at its input to the first optical interface.

The node comprises furthermore an optical circulator, which comprises at least three ports.

The optical circulator is coupled at its first port to an output of the optical WDM amplifier. The optical circulator provides signals received at its first port to its second port, while the circulator furthermore provides signals received at its second port to its third port.

The optical circulator is connected at its second port to an optical demultiplexer-and-multiplexer, which is arranged to distribute the optical WDM signals onto respective optical gates. Furthermore, the optical circulator is connected at its third port to a second optical interface of the node. At this second optical interface, optical signals may be transmitted.

The node comprises furthermore a further optical gate, which optically bypasses the optical WDM amplifier. Furthermore, the node comprises a control unit, which is operable to close or open the further optical gate in dependence on control information received by the control unit.

### Brief Description of the Figures

Figure 1a shows packet optical add drop multiplexing nodes located along a segment of an optical ring network.
Figure 1b shows a reflection profile obtained from Optical Time-Domain Reflectometry measurement.
Figure 2 shows a proposed POADM node receiving a measurement signal from another POADM node according to a first embodiment of the invention.
Figure 3 shows the proposed POADM node receiving a measurement signal from another POADM node according to a second embodiment of the invention.
Figure 4 shows the proposed POADM node together with a furthermore proposed POADM node carrying out OTDR measurement according to a first embodiment.
Figure 5 shows the proposed POADM node together with the furthermore proposed POADM node carrying out OTDR measurement according to a further embodiment.

### Description of Embodiments

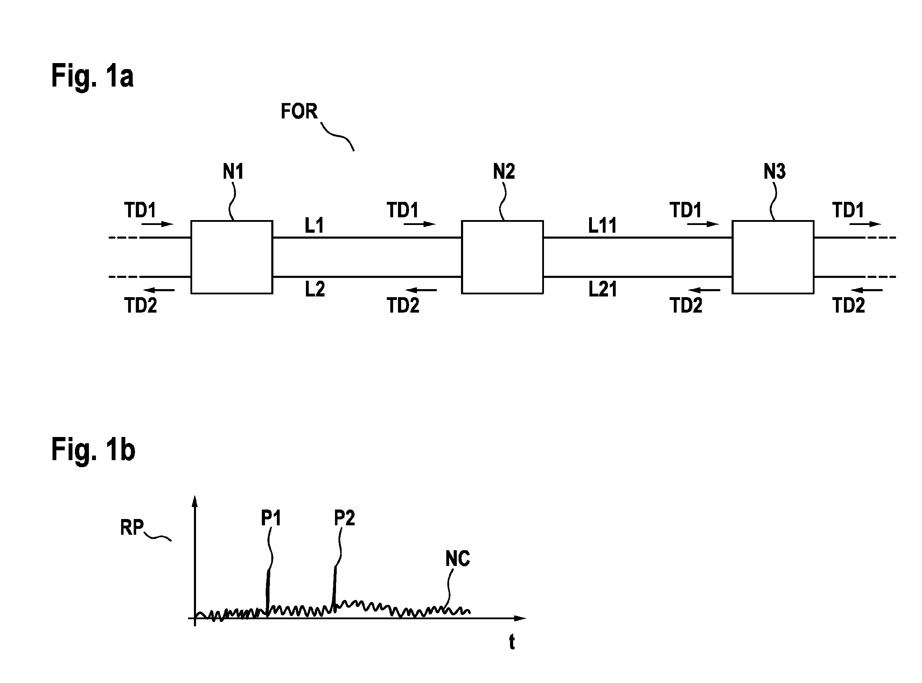

Figure 1a shows a set of network nodes N1, N2, N3 located along a segment of an optical ring network FOR. The optical ring network is not shown in total. It is evident, that the nodes N1, N2, N3 are connected in a ring structure network, preferably also by further nodes of the optical ring network. The nodes N1, N2, N3 transmit data along the links L1, L11 in a first transmission direction TD1. Furthermore, the nodes N1, N2, N3 transmit data along the optical links L2, L21 in a second transmission direction TD2, which is opposite to the first transmission direction TD1.

Assuming, that one of the nodes, for example the node N1, implements the protocol of IEEE1588 V2 by synchronizing the clocks of other nodes of the network to its own clock in order to make the optical ring network operable as a wireless backhauling network, link asymmetry is a crucial issue as previously described above. Thus, there may be a need to measure individual lengths of individual links L1, L2, L11, L21 of the network in order to provide the measured link lengths to the protocol of IEEE1588 V2, which then may take these measured link lengths into account for properly carrying out synchronization of the nodes N1, N2, N3.

For example, if the optical link L1 was to be measured, it would be a possibility, to perform Optical Time-Domain Reflectometry (OTDR) measurement, wherein an OTDR measurement signal may be sent from the position of the node N1 into the optical link L1. If furthermore a reflecting element such as for example a reflector or a mirror was placed then at the end of the link L1 at the position of the node N2, the reflected signal would traverse back along the link L1 in a direction opposite to the transmission direction TD1. Receiving the reflected signal at the position of the node N1 at the beginning of the link L1 would then make it possible to carry out OTDR measurement, since at this position of the node N1 at the beginning of the Link L1 a reflection profile may be measured.

Such reflection profile may then look similar to the reflection profile RP shown in Figure 1b. The reflection profile RP is shown over time t. Such a reflection profile RP measures optical signal fractions that may be reflected back by optical components, wherein a reflecting element placed at the position of the node N2 in Figure 1a may cause a peak P1. Furthermore, the optical link L1 may cause a noise component NC, due to the fact that an optical link in the form of an optical fiber may reflect small signal fractions of the transmitted OTDR measurement signal.

The reflection profile RP shows also a further peak P2, which may be caused by a further reflecting element placed at a position further up along the transmission direction TD1 behind the position of the node N2. This may for example be the position of the node N3.

For obtaining a reflection profile such as the example of the reflection profile RP shown in Figure 1b, the OTDR measurement signal may be a single pulse of an optical signal. For example, a pulse with of 1 ms may correspond to a spatial resolution of 150 m.

For obtaining a reflection profile such as the profile RP, with two peaks P1 and P2, this implies that there would be reflecting elements at respective positions such as the nodes N2 and N3 shown in Figure 1a. Having measured the reflection profile RP, the peaks P1 and P2 may be detected using signal processing and then converting the time position of the peaks P1 and P2 within the reflection profile to actual distances, preferably measured in meters, knowing the propagation speed of the optical measurement signals.

OTDR measurement may also be carried out using as a measurement signal a correlation sequence, which is transmitted into an optical link. The signal that is then measured as the reflected signal is then correlated with the transmitted sequence itself. Preferably, the transmitted signal has a correlation function, which approximates the direct delta function. Thus, the result of the correlation of the measured reflected signal with the measurement sequence is a well approximated estimate of the impulse response, which may be given by the obtained reflection profile. The technique of using the correlation sequence as a measurement sequence allows to use a measurement signal, which has an overall greater energy than a simple pulse measurement signal of a same maximum amplitude.

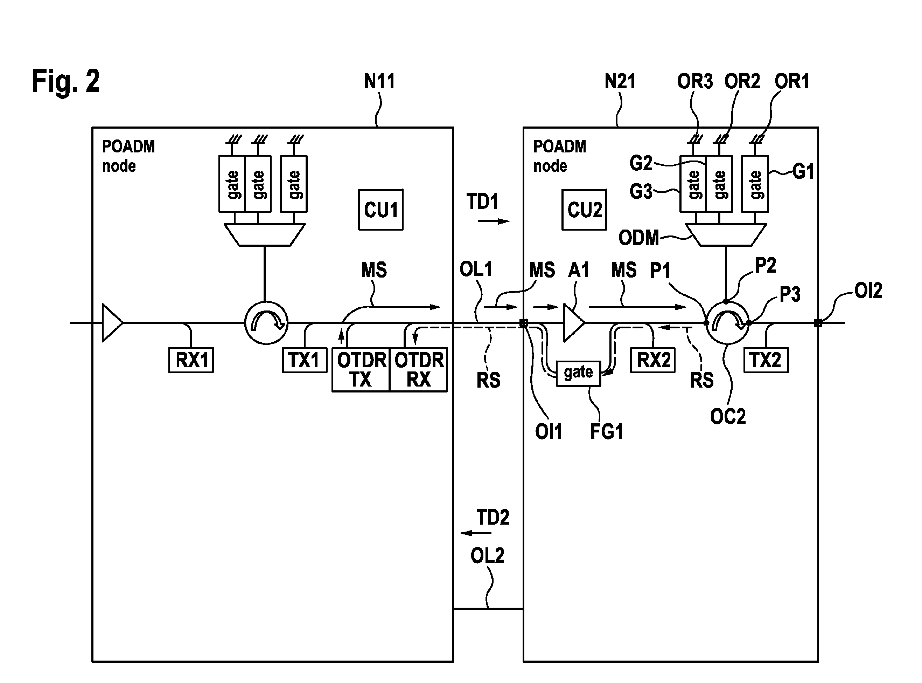

Figure 2 shows a proposed POADM node N21. Furthermore, the Figure 2 shows a modified POADM node N11. The node N11 contains a transmitter TX1 for transmitting one or more optical data packets, which may be inserted into respective data packet time slots of one or more optical WDM data packet signals transmitted along the transmission direction TD1. Furthermore, the node N11 contains an OTDR transmission unit OTDRTX, which generates an OTDR measurement signal MS. The measurement signal MS is transmitted by the node N11 into the optical link OL1 in the transmission direction TD1.

The nodes N11 and N21 are connected in the transmission direction TD1 by the optical link OL1 and in the opposite transmission direction TD2 by the optical link OL2.

The measurement signal MS has a wavelength, which is equal to one of the wavelengths used for transmission of data packets from the node N11 to the node N21. The node N21 contains an optical interface OI1, at which the node is able to receive a set of optical packet WDM signals. Furthermore, the node N21 contains an optical WDM amplifier A1, which is coupled at its input to the optical interface OL1.

The node N21 contains furthermore a receiver RX2, which is optically coupled to the output of the optical WDM amplifier. The receiver RX2 is able to receive one or more optical data packets of the optical packet WDM signals.

The node N21 contains furthermore an optical circulator OC2, which contains at least three ports P1, P2, P3. The circulator OC2 is coupled at its first port P1 to the output of the optical WDM amplifier A1. The circulator OC2 provides signals received at its first port P1 to its second port P2 and furthermore provides signals received at second port P2 to a third port P3. The circulator OC2 is furthermore connected at its second port to an optical demultiplexer-and-multiplexer ODM. The optical demultiplexer / multiplexer ODM is arranged, such that it distributes optical WDM signals received from the port P2 onto respective optical gates G1, G2, G3. Each of the gates G1, G2, G3 is followed by an optical reflector OR1, OR2, OR3. A reflector is preferably an optical mirror.

The flow of optical packet WDM signals within the node N21 starts at the optical interface OI1. Next, the optical WDM packets are amplified by the amplifier A1 and then provided from the output of the amplifier A1 to the port P1. From there, the signals are provided to the port P2 onto the optical demultiplexer-and-multiplexer ODM. Each of the optical packet WDM signals is provided to a respective gate in dependence on its wavelength, and is thus thus being provided to a respective gate G1, G2, G3. The optical gates G1, G2, G3 are configurable by a control unit CU2 of the node N21. In the case, that a gate G1, G2, G3 is closed, the respective optical packet signal traverses the gate and is reflected by the respective optical reflector and then retraverses the gate back toward the optical demultiplexer-and-multiplexer ODM, from where it is provided to the port P2 of the circulator OC2. Those optical packet WDM signals, for which the respective optical gate G1, G2, G3 is closed, thus reach the port P2 in the direction from the optical demultiplexer-and-multiplexer ODM, and are then provided by the circulator OC2 to the port P3. From here. they further on propagate towards the second optical interface OI2 along the transmission direction TD1.

The purpose of the gates G1, G2, G3 is to control, whether one or more optical packets of the respective optical packet signal are to be removed. In the case, that for the time duration of a specific optical data packet and a specific optical packet signal of a specific wavelength the corresponding gate is closed, the optical data packet is transmitted and propagated within the node N21 and thus reaches the optical interface OI2 for further transmission along the network in the transmission direction TD1. In the case, that the optical gate is open, the optical data packet is removed. The optical data packet is removed to an extent, which corresponds to twice the extinction ration of the corresponding optical gate being open.

The node N21 contains furthermore a transmitting unit TX2, which is able to insert optical data packets into the stream of optical packet WDM signals to be transmitted at the interface OI2.

In the case, that the OTDR transmitter OTDR TX of the node N1 inserts an OTDR measurement signal MS into the optical link OL1, this measurement signal MS passes the optical link OL1 and is received as one of optical WDM signals at the interface OI1. From there, the measurement signal MS is amplified by the amplifier A1 and reaches the port P1 of the circulator OC2. At this port P1, a reflection signal RS is caused as a reflection of the measurement signal MS. This reflection signal RS is reflected back from the circulator OC2 in the direction opposite to the transmission direction TD1. The reflection signal RS is not able to traverse the optical amplifier A1, due to the fact that an optical WDM amplifier contains an optical isolator, which does not allow the signal RS to traverse from the output of the amplifier A1 to the input of the amplifier towards the optical interface OI1. Thus, there is a need to foresee a transmission path of the signal RS from the port P1 towards the optical interface OI1. Therefore, the node N21 contains a further optical gate FG1, which optically bypasses the optical WDM amplifier in that transmission direction which is opposite to the transmission direction TD1. The gate FG1 bypasses the amplifier A1 by optically coupling the port P1 of the circulator OC2 with the optical interface OI1. Thus, the reflected signal RS is able to traverse the amplifier A1 and is also able to be transmitted from the optical interface OI1 of the node N21 into the optical link OL1 in the transmission direction opposite to the transmission direction TD1.

The node N11 then is able to receive the reflected signal RS at an OTDR receiver OTDR RX. Therefore, the node N11 is able to determine the reflection profile. Such reflection profile may then be used by a processing unit of the node N11, not explicitly shown in Figure 2, for detecting a peak in a reflection profile and determining the link length of the link OL1.

The control unit CU2 of the node N21 is able to configure the configuration of the gate FG1. In other words, the control unit CU2 is able to close or open the gate FG1. The control unit CU2 does so in dependence on control information received by the control unit CU2.

Control information indicating to the control unit CU2, whether the gate FG1 should be opened or closed, may be received by the control unit CU2 via one of the optical packet WDM signals received at the node N21. For this purpose, the control unit CU2 may be optically coupled to the interface OI1 for detecting one of the optical packet WDM signals carrying the control information. Preferably, one of the optical packet WDM signals is a so-called control channel. From control information contained within one or more data packets of the optical packet WDM signal forming the control channel the control unit CU2 is able to derive the configuration of the gate FG1 that is needed. The gate FG1 has to be open, in the case that normal data transmission has to be carried out, while the gate FG1 has to be closed, in the case that link measurement shall be performed.

Alternatively, the node N21 may receive control information at a network interface, not explicitly shown in Figure 2. The network interface provides the control information to the control unit CU2 for configuring the gate FG1.

For configuring the gate FG1, the control unit CU2 is connected to the gate FG1, wherein this connection is not explicitly shown in Figure 2.

The advantage of the proposed node N21 is, that the node N21 can be automatically configured to a state, in which OTDR measurement may be carried out by measuring the length of the link OL1. Such measurement may be performed automatically, by inserting an OTDR measurement signal at the node N11, while the configuration of the node N21, in detail the configuration of the gate FG1, does not imply any manual intervention such as needed for normal OTDR measurement. Thus, manual intervention can be avoided for link length measurement.

For performing link length measurement of the link OL2, one solution would be to foresee transmission of a measurement signal at the node N21 into the link OL2 and reflection of the measurement signal received at the node N11 from the link OL2 back into the link OL2. For such a solution, the node N11 would contain at the receiving side - for receiving the measurement signal from the link OL2- devices, such as shown in the upper hand part of the node N21. Furthermore, the node N21 would contain transmission devices at the input of the link OL2 such as shown on the right hand part of the node N11.

The measurement results obtained for the link lengths of the links OL1 and OL2 will then be gathered at the node N11, wherein the measurement results determined at the node N21 may be transmitted to the node N11 along a previously mentioned so-called control channel. Alternatively, this information is provided by the node N21 to the node N11 along a network management plane, wherein the nodes N11 and N21 would contain network management interfaces, not explicitly shown in Figure 2.

Having gathered at the node N11 link length measurements of the links OL1 and OL2, it is then possible to take such measurement results into account for the protocol IEEE1588 V2 for synchronizing the node N21 to the node N11, such that sufficient accuracy is achieved in order to use the optical transmission between the nodes N11 and N21 for the purpose of wireless backhauling network transmission.

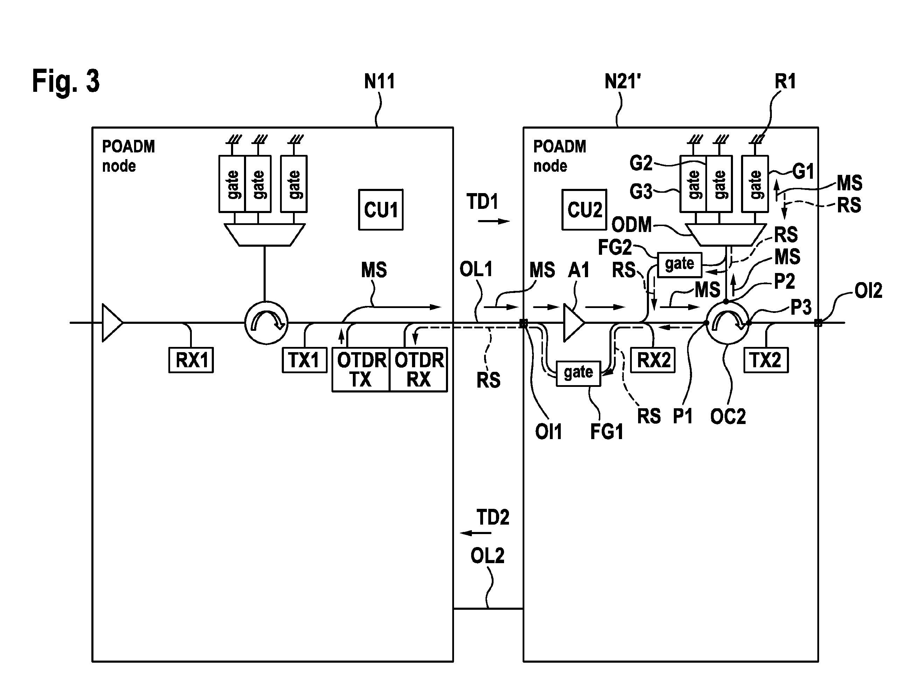

Figure 3 shows the node N11 as previously described with regard to Figure 2 as well as a node N21', which is essentially equal to the node N21 previously described with regard to Figure 2.

The node N21' differs from the node N21 of Figure 2 in that the node N21' contains an optical gate FG2, which optically bypasses the first port P1 and the second port P2 of the optical circulator OC2 by optically coupling the optical demultiplexer-and-multiplexer ODM with the optical gate FG1. Furthermore, the control unit CU2 is operable to configure the gate FG2 in dependence on control information received at the node N21' by the control unit CU2.

Preferably, the gates FG1 and FG2 are not realized as separate optical gates but as one integral gate - not shown explicitly in Figure 3 - that optically bypasses the first port P1 and the second port P2 of the optical circulator OC2 as well as the amplifier A1. Such bypassing is realized, by the integral gate optically coupling the optical demultiplexer-and-multiplexer ODM with the interface OI1.

The control unit CU2 is able to open or close the gate FG2. The gate FG2 bypasses the second port P2 and the first port P1 of the circulator OC2 in the transmission direction that is opposite to the transmission direction TD1. The measurement signal MS is received at the interface OI1 and amplified by the amplifier A1. The measurement signal MS then reaches the port P1 of the coupler OC2 and is provided to the port P2 of the coupler OC2. From thereon, the measurement signal reaches the optical demultiplexer-and-multiplexer ODM. From here, the measurement signal reaches one of the optical gates placed behind the optical demultiplexer / multiplexer ODM.

In this example, the measurement signal MS reaches the gate G1. The control unit CU2 configures the gate G1, such that the gate G1 is open and allows to let the measurement signal MS traverse the gate G1 towards the reflector R1.

The configuration of the gate G1 is carried out by the control unit CU2 in dependence of control unit information indicating through the control unit CU2, which of the optical gates G1, G2, G3 is that gate, at which the measurement signal MS having a respective specific wavelength will be received. At the reflector R1, the measurement signal MS causes a reflection signal RS, which again traverses the first gate G1 towards the optical demultiplexer-and-multiplexer ODM, from where the reflected signal RS then reaches the gate FG2.

The gate FG2 is closed by the control unit CU2 in measurement mode. Thus, the reflection signal RS traverses the gate FG2 and then bypasses the second port and the first port P2 and P1 of the circulators OC2. Thus, the reflection signal RS reaches the gate FG1, which is also configured to be closed in measurement node by the control unit CU2. Thus, the reflection signal RS is transmitted back into the optical line OL1 towards the node N11.

At the node N11, the OTDR receiver OTDR RX then is able to measure the reflection signal RS, from which it may then determine the reflection profile and therefore measure the link length of the optical link OL1.

For the measurement of the optical link OL1, the node N11, shown in Figure 2 and Figure 3, takes into account, that the propagation time of the measurement signal from the node N11 to the node N21 or the node N21' and the propagation time of the reflection signal RS from the node N21 or the node N21' to the node N11 has to be divided by a factor of 2.

The advantage of the node N21' in contrast to the node N21 shown in Figure 2 is, that in the case that the reflection caused at the port P1 of the optical circulator OC2 is not strong enough to cause a peak within the reflection profile of sufficient amplitude, the configuration of the gates G1, G2 and G3 controlled by the control unit CU2 allows to cause a reflection peak at the reflector R1 of a possibly greater amplitude. This allows a more reliable measurement of the link length of the link OL1.

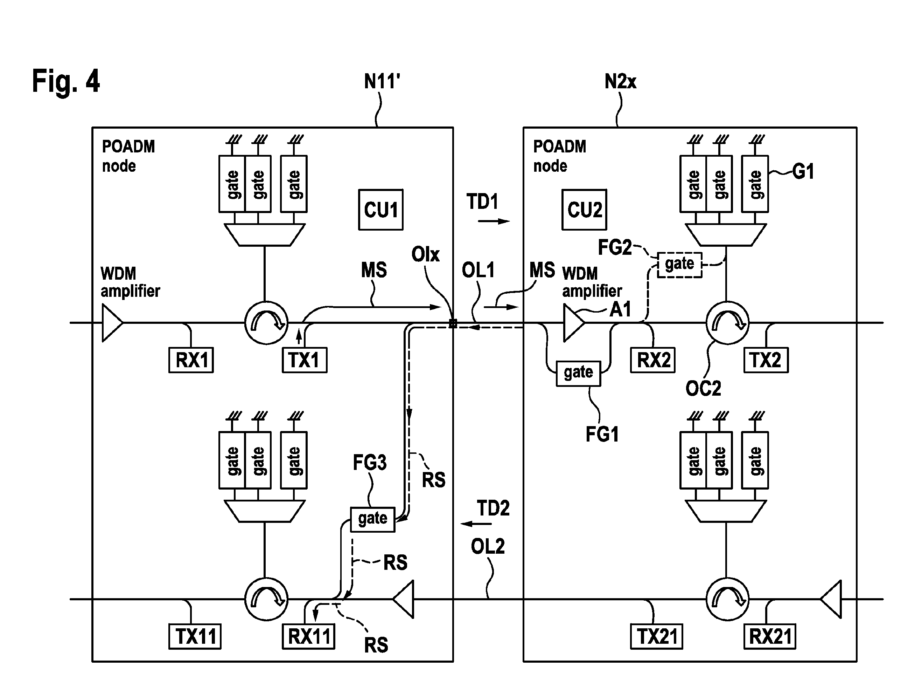

Figure 4 shows a node N2x, which contains components for reception, transmission and reflection of signals with regard to the first transmission direction TD1 as previously described for the node N21 of Figure 2 or the node N21' of Figure 3. The gate FG2 indicated by the dashed lines is the component, which makes the node N2x equal to the transmission direction TD1 and the optical link OL1 equal to the node N21' with regard to the transmission direction TD1 and the link OL1, while an absence of the gate FG2 makes the node N2x equal to the node N21 of Figure 2 with regard to the transmission direction TD1 and the link OL1.

The node N2x contains furthermore on the lower hand side of Figure 4 corresponding components for data reception and transmission along the opposite transmission direction TD2.

The node N11' differs from the node N11 previously shown in Figure 2 and 3, in that the node N11' does not contain a separate OTDR transmitter OTDR TX and also not a separate OTDR receiver OTDR RX. Furthermore, the node N11 also differs from the node N11 previously shown in the Figures 2 and 3, in that the node N11' contains devices for data transmission and data reception along the transmission direction TD2 just as the node N2x.

Even furthermore, the node N11' contains a gate FG3, whose input is optically coupled to an optical interface OIX, at which the node N11' transmits signals into the optical link OL1. Furthermore, the gate FG3 has an output that is optically coupled to a receiver RX11, that used at the node N11' for detecting optical data packets received with an optical packet WDM signals from the optical link OL2 in the transmission direction TD2.

In measurement mode, the transmitter TX1 generates the measurement signal MS used for OTDR measurement. Preferably, the measurement signal is generated, by operating a variable optical attenuator placed after the transmitter TX1 for shaping a pulse out of an optical signal provided by the transmitter TX1. The variable optical attenuator is not explicitly shown in Figure 4. A reflection signal RS received at the interface OIX from the link OL1 at the node N11' is then provided to the receiver RX11 of the node N11'. This is ensured, since the gate FG3 is configured in measurement mode, such that it is closed. Gate FG3 optically couples the optical interface OIX with the receiver RX11.

The Node N2x is configured in measurement mode as previously described above with regard to Figures 2 and 3.

The node N11' may then measure the reflection signal RS using its receiver RX11 and furthermore determine a link length measurement of the length OL1 as previously described with regard to the OTDR receiver OTDR RX of Figure 2 or Figure 3.

The advantage of the node N11' is, that the node N11' does not require a separate OTDR receiver for measuring the reflection profile.

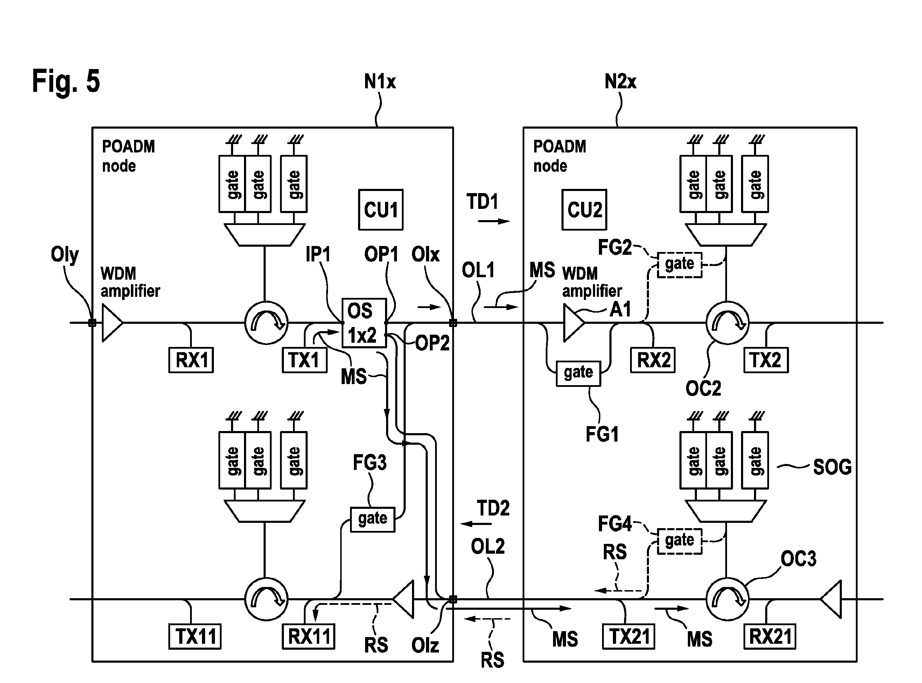

Figure 5 shows a node N1x and the node N2x.

The node N1x is essentially equal to the node N11' previously described with regard to Figure 4.

Furthermore, the node N1x contains an optical switch OS, which is a 1x2 switch.

The input of the optical switch OS is arranged, such that it receives optical signals provided by the transmitter TX1. Furthermore, the switch OS provides signals from its input port IP1 either to its output port OP1 or to its other output port OP2. In normal data transmission mode, the optical switch OS is configured by the control unit CU1 of node N1x, such that optical signals are provided from the input port IP1 to the output port OP1. Thus, in such a normal transmission mode, the optical switch OS optically couples the transmitter TX1 with the optical interface OIX as well as the interface OIX with an optical interface OIY. The interface OIY is an optical interface, at which the node N1x receives optical packet WDM signals.

In measurement mode, the optical switch OS provides the measurement signal MS generated by the transmitter TX1 to an optical interface OIZ, at which the node N1x is connected to the optical line OL2. Thus, the measurement signal MS is inserted by the node N1x into the optical line OL2 in a direction that is opposite to the transmission direction TD2. Such a measurement signal MS is then received by the node N2x and reflected by a port of an optical circulator OC3. Alternatively, the measurement signal MS is received by the node N2x and then provided by the optical circulator OC3 to one of the optical gates of the set of gates SOG, from where the signal MS is reflected causing the reflection signal RS. The reflection signal RS is then provided by an optional optical gate FG4 towards the optical link OL" on the transmission direction TD2 .

The reflection signal RS is transmitted over the optical link OL2 in the transmission direction TD2 and received at the optical interface OIZ at the node N1x. From thereon, the reflection signal RS propagates towards the receiver RX11 of the node N1x. Thus, the node N1x is able to choose, whether the measurement signal MS shall be provided to the optical link OL2 for measuring the link length of the optical link OL2 or whether the measurement signal MS is provided to the optical link OL1 for measuring the link length of the link OL1.

Coming back to Figure 1a, it has to be taken into account, that the configuration previously described with regard to the nodes shown in the Figures 2, 3, 4 or 5 may not only apply to the nodes N1 and/or N2, but also to a configuration of the nodes N1 and N3. In the case, that OTDR measurement is carried out not only using a reflected signal caused by a port of an optical coupler, but also a reflection caused by a reflector placed behind an optical gate within one of the nodes, multiple reflection peaks by reflectors as respective reflectors within respective nodes, such as the nodes N2 and N3, may be used for measuring the length of the length L1 and L11, for example within one measurement step.

As it has been described in detail previously with regard to the Figures 2, 3, 4 and 5, the amplifier A1 is optically bypassed by the optical gate FG1 for allowing a transmission of the reflected measurement signal in the transmission direction that is opposite to the transmission direction TD1 via the optical link OL1. There may be further optical amplifiers at intermediate transmission devices placed along the optical link OL1 with a same preferred transmission direction TD1 as the amplifier A1. Thus, for ensuring proper OTDR measurement, such intermediate transmission devices also contain respective optical gates which optically bypass the respective optical amplifiers. Preferably, an intermediate device contains a respective control unit that controls the configuration of the optical gate in dependence on control information. The control information may be received at an on intermediate transmission device via the previously mentioned control channel or from a network management plane via a network management interface.

## Claims

1. Packet optical add drop multiplexing node for an optical ring network,
comprising
- a first optical interface (OI1), operable to receive a set of optical Wavelength Division Multiplex (WDM) signals,
- an optical WDM amplifier (A1), optically coupled at its input to said first optical interface (OI1),
- an optical circulator (OC2), comprising at least three ports (P1, P2, P3),
wherein said optical circulator (OC2)
○ is coupled at its first port (P1) to an output of said optical WDM amplifier (A1), and
○ provides signals received at its first port (P1) to its second port (P2), and
○ provides signals received at its second port (P2) to its third port (P3), and
○ is connected at its second port (P2) to an optical demultiplexer-and-multiplexer (ODM), arranged to distribute said optical WDM signals onto a set of respective optical gates (G1, G2, F3), and
○ is connected at its third port (P3) to a second optical interface (OI2) of said node, comprising furthermore
- a further optical gate (FG1), optically bypassing said optical WDM amplifier (A1), and
- a control unit (CU2), operable to configure said further optical gate (FG1) in dependence on control information received by said control unit (CU2).

2. Packet optical add drop multiplexing node according to claim 1,
wherein said further optical gate (FG1) is a first further optical gate,
wherein said node comprises furthermore a second further optical gate (FG2), optically bypassing said first and said second port (P1, P2) of said optical circulator (OC),
wherein said control unit (CU2) is furthermore operable to configure said second further optical gate (FG2) in dependence on said control information,
and wherein said control unit (CU2) is operable to configure said set of respective optical gates (G1, G2, G3) in dependence on said control information.

3. Packet optical add drop multiplexing node according to claim 1,
comprising furthermore an optical receiver (RX2), optically coupled at its input to an output of said optical WDM amplifier (A1).

4. Packet optical add drop multiplexing node according to claim 1 or 2,
comprising furthermore an optical transmitter (TX2), optically coupled at its output to said second optical interface (OI2).

5. Packet optical add drop multiplexing node according to claim 1,
wherein said first optical interface (OI1) is operable to receive an optical packet signal carrying said control information,
wherein said control unit (CU2) is optically coupled to said first optical interface (OI1),
and wherein said control unit (CU2) is operable to derive said control information from said optical packet signal carrying said control information.

6. Packet optical add drop multiplexing node according to claim 1,
wherein said node comprises furthermore a network management interface,
wherein said network management interface is operable to receive said control information from a network management plane,
and wherein said network management interface is operable to provide said control information to said control unit.

7. Packet optical add drop multiplexing node according to claim 2,
wherein said first and said second further optical gate are realized as one integral optical gate that optically bypasses the first port P1 and the second port P2 of the optical circulator OC2 as well as the amplifier A1.

## Amended claims

### Amended claims in accordance with Rule 137(2) EPC.

1. Packet optical add drop multiplexing node for an optical ring network,
comprising
- a first optical interface (OI1), operable to receive a set of optical Wavelength Division Multiplex (WDM) signals,
- an optical WDM amplifier (A1), optically coupled at its input to said first optical interface (OI1),
- an optical circulator (OC2), comprising at least three ports (P1, P2, P3),
wherein said optical circulator (OC2)
o is coupled at its first port (P1) to an output of said optical WDM amplifier (A1), and
o provides signals received at its first port (P1) to its second port (P2), and
o provides signals received at its second port (P2) to its third port (P3), and
o is connected at its second port (P2) to an optical demultiplexer-and-multiplexer (ODM), arranged to distribute said optical WDM signals onto a set of respective optical gates (G1, G2, F3), and
o is connected at its third port (P3) to a second optical interface (OI2) of said node, **characterized by**
- a further optical gate (FG1), optically bypassing said optical WDM amplifier (A1), and
- a control unit (CU2), operable to configure said further optical gate (FG1) in dependence on control information received by said control unit (CU2).

2. Packet optical add drop multiplexing node according to claim 1,
wherein said further optical gate (FG1) is a first further optical gate,
wherein said node comprises furthermore a second further optical gate (FG2), optically bypassing said first and said second port (P1, P2) of said optical circulator (OC),
wherein said control unit (CU2) is furthermore operable to configure said second further optical gate (FG2) in dependence on said control information,
and wherein said control unit (CU2) is operable to configure said set of respective optical gates (G1, G2, G3) in dependence on said control information.

3. Packet optical add drop multiplexing node according to claim 1,
comprising furthermore an optical receiver (RX2), optically coupled at its input to an output of said optical WDM amplifier (A1).

4. Packet optical add drop multiplexing node according to claim 1 or 2,
comprising furthermore an optical transmitter (TX2), optically coupled at its output to said second optical interface (OI2).

5. Packet optical add drop multiplexing node according to claim 1,
wherein said first optical interface (OI1) is operable to receive an optical packet signal carrying said control information,
wherein said control unit (CU2) is optically coupled to said first optical interface (OI1),
and wherein said control unit (CU2) is operable to derive said control information from said optical packet signal carrying said control information.

6. Packet optical add drop multiplexing node according to claim 1,
wherein said node comprises furthermore a network management interface,
wherein said network management interface is operable to receive said control information from a network management plane,
and wherein said network management interface is operable to provide said control information to said control unit.

7. Packet optical add drop multiplexing node according to claim 2,
wherein said first and said second further optical gate are realized as one integral optical gate that optically bypasses the first port P1 and the second port P2 of the optical circulator OC2 as well as the amplifier A1.
